# DEMANDE DE BREVET EUROPEEN

(11) **EP 1 764 692 A2**
(43) Date de publication de la demande: **21.03.2007**
(21) Numéro de dépôt: 06018298.7
(22) Date de dépôt: 01.09.2006
(51) Int. Cl.: G06F 11/14

(54) **Procédé de sauvegarde et de restauration de données stockées dans un terminal**

(30) Priorité: 15.09.2005 FR 0509460; 07.06.2006 FR 0652037
(71) Demandeur: FRANCE TELECOM, 75015 Paris (FR)
(72) Inventeur: Jezequel, Mickael, 22700 Louannec (FR); Pinson, Frédérique, 22700 Perros-Guirec (FR); Clavier, Eric, 22760 Trebeurden (FR)

(57) **Abrégé**

Procédé de sauvegarde de données stockées dans un terminal équipé d'un protocole de synchronisation entre ledit terminal et un serveur de synchronisation, ledit protocole étant apte à être mis en oeuvre selon un mode bidirectionnel total.
Selon l'invention, ledit procédé de sauvegarde comprend :
- une phase d'initialisation comprenant les étapes consistant :
* pour le terminal, à envoyer à destination du serveur de synchronisation un message d'initialisation comportant un indicateur de demande de sauvegarde,
* pour le serveur de synchronisation, à envoyer à destination du terminal un message de réponse requérant du terminal la mise en oeuvre dudit mode bidirectionnel total,

- une phase de sauvegarde comprenant les étapes consistant :
* pour le terminal, à envoyer au serveur de synchronisation la totalité des données à sauvegarder,
* pour le serveur de synchronisation, à stocker les données reçues du terminal.
Application à la sauvegarde et la restauration de données stockées dans un terminal disposant d'une application de synchronisation de données.

## Description

La présente invention concerne un procédé de sauvegarde et un procédé de restauration de données stockées dans un terminal équipé d'un protocole de synchronisation.

L'invention trouve une application particulièrement avantageuse dans le domaine de la sauvegarde et la restauration de données stockées dans un terminal, lorsque celui-ci dispose d'une application de synchronisation de données utilisant notamment le protocole connu sous l'acronyme SyncML pour « Synchronization Mark-up Language ».

Le nombre de terminaux présents sur le marché ainsi que leur aptitude à stocker des données personnelles de l'utilisateur ne cessent d'augmenter. A titre d'exemples de tels terminaux, on peut citer les téléphones fixes ou mobiles, les ordinateurs personnels, les assistants personnels, etc.

La plupart du temps, ces données personnelles ont une valeur importante pour l'utilisateur, lequel doit donc pouvoir les récupérer en cas de besoin, par exemple lors d'un changement de terminal, à la suite d'une perte ou d'un vol, ou encore si le terminal devient hors d'usage.

Les solutions les plus couramment proposées pour sauvegarder et restaurer des données stockées dans les terminaux se caractérisent de la manière suivante :
- II s'agit d'une application dédiée qui est téléchargée et installée dans le terminal. Elle ne fait donc pas partie des applications natives disponibles sur le terminal.
- La sauvegarde peut être déclenchée manuellement par l'utilisateur à partir d'un menu approprié et/ou automatiquement en lançant l'application correspondante à intervalles réguliers ou à chaque modification des données à sauvegarder.

Lors du déclenchement d'une sauvegarde, l'ensemble des informations stockées dans le terminal et faisant partie des informations à sauvegarder sont transmises à un serveur de stockage de données, grâce à un protocole spécifique à l'application.

Inversement, lors d'une restauration des données, ce sont les données qui ont été stockées sur le serveur de stockage lors de la dernière sauvegarde qui sont transmises et enregistrées dans le terminal où elles remplacent les informations qui s'y trouvaient.

Par ailleurs, certains terminaux du commerce disposent d'origine aujourd'hui d'une application de synchronisation basée notamment sur le protocole SyncML, qui est à l'heure actuelle le seul protocole normalisé pour la synchronisation de données. Des informations sur ce protocole peuvent être obtenues sur le site www.openmobilealliance.org/tech/affiliates/syncml/.

Sans toutefois réaliser de sauvegardes ni de restaurations au sens propre de ces termes, les applications de synchronisation permettent cependant d'harmoniser les informations stockées sur le terminal avec un serveur de synchronisation dédié. Parmi les utilisations les plus courantes, on peut citer la synchronisation des contacts dans les carnets d'adresses. L'application a pour but dans ce cas de maintenir une cohérence entre la base de contacts présents dans le carnet d'adresses du terminal et celle d'un carnet d'adresses réseau, accessible par le web. Ainsi, lorsqu'un contact est ajouté ou modifié sur le terminal (resp. le web) par exemple, le contact est ajouté ou modifié automatiquement sur le web (resp. le terminal).

Le protocole SyncML offre différents mécanismes de synchronisation entre un client et un serveur, à savoir les modes de synchronisation bidirectionnel ou unidirectionnel, selon que la synchronisation s'effectue aussi bien du terminal vers le serveur que du serveur vers le terminal, ou uniquement du terminal vers le serveur ou du serveur vers le terminal. En outre, ces synchronisations peuvent être totales ou différentielles. Une synchronisation différentielle est réalisée par transfert entre le terminal et le serveur des données qui différent, tandis qu'une synchronisation totale est réalisée par transfert en bloc des données du terminal au serveur et des données qui différent du serveur au terminal.

Seul le mode bidirectionnel, total ou différentiel, est obligatoire aujourd'hui. Les autres modes, notamment ceux dédiés à la sauvegarde et la restauration des données, comme le mode unidirectionnel total, sont facultatifs et en pratique non implémentés dans les terminaux utilisant le protocole SyncML.

On trouve donc actuellement en service des terminaux mobiles équipés d'un protocole SyncML souvent non utilisé car les services de synchronisation ne sont pas encore massivement déployés. On peut aussi considérer qu'une grande partie des terminaux SyncML qui seront mis dans le commerce au cours des prochaines années seront également dans ce cas.

Les solutions de sauvegarde/restauration de données qui ont été décrites plus haut présentent de nombreux inconvénients, en particulier :
- Il ne s'agit pas d'applications natives des terminaux ; elles doivent donc être téléchargées et installées sur le terminal, ce qui les réserve aux terminaux haut de gamme puisqu'en effet seuls ces derniers permettent l'installation d'applications supplémentaires en plus de celles proposées par le constructeur. Les conséquences directes en sont :
   * Une limitation drastique du nombre de terminaux pouvant accéder à un service de sauvegarde/restauration de données.
   * Un coût élevé de développement de l'application puisque celle-ci doit être spécifiquement développée pour chaque type de terminal et pour chaque évolution du logiciel du terminal.
   * Une complexité accrue de l'intégration du service pour l'opérateur. Le service doit être validé sur chaque type de terminal.
- Il s'agit d'applications propriétaires qui ne sont pas basées sur des normes et sont donc étroitement associées à la société les ayant développées. En cas de changement de société, tout le service s'en trouve modifié et nécessite :
   * Le changement de l'application installée sur le terminal, y compris pour les terminaux déjà en service.
   * Le changement des serveurs dédiés au service.

Aussi, le problème technique à résoudre par l'objet de la présente invention est de proposer un procédé de sauvegarde de données stockées dans un terminal équipé d'un protocole de synchronisation entre ledit terminal et un serveur de synchronisation, ledit protocole étant apte à être mis en oeuvre selon un mode bidirectionnel total, qui permettrait d'offrir un service de sauvegarde/restauration de données en s'appuyant sur le protocole de synchronisation existant dans le terminal, tel que le protocole SyncML, et en modifiant le comportement du serveur de synchronisation dédié au mode bidirectionnel pour le rendre apte à fournir un service de sauvegarde/restauration, essentiellement unidirectionnel par nature.

La solution au problème technique posé consiste, selon la présente invention, en ce que ledit procédé de sauvegarde comprend :
- une phase d'initialisation comprenant les étapes consistant :
   * pour le terminal, à envoyer à destination du serveur de synchronisation un message d'initialisation comportant un indicateur de demande de sauvegarde,
   * pour le serveur de synchronisation, à envoyer à destination du terminal un message de réponse requérant du terminal la mise en oeuvre dudit mode bidirectionnel total,
- une phase de sauvegarde comprenant les étapes consistant :
   * pour le terminal, à envoyer au serveur de synchronisation la totalité des données à sauvegarder,
   * pour le serveur de synchronisation, à stocker les données reçues du terminal.

Selon un premier mode de réalisation, ladite étape de stockage consiste à stocker en bloc, dans un espace-mémoire du serveur de synchronisation, lesdites données reçues du terminal.

Selon un deuxième mode de réalisation, ladite étape de stockage consiste à modifier des données préalablement stockées dans un espace-mémoire du serveur de synchronisation, conformément au schéma suivant :
- stockage des données nouvelles reçues,
- suppression des données préalablement stockées, non reçues,
- remplacement des données préalablement stockées par des données reçues modifiées.

Par ailleurs, l'invention prévoit que ledit indicateur de demande de sauvegarde consiste en un renommage d'une donnée d'initialisation transmise dans ledit message d'initialisation.

L'invention concerne également un procédé de restauration de données stockées un terminal, lesdites données ayant été préalablement sauvegardées sur un serveur de synchronisation selon le procédé de sauvegarde défini ci-dessus, ledit terminal étant équipé d'un protocole de synchronisation apte à synchroniser les données stockées sur le terminal avec les données stockées sur le serveur de synchronisation, ledit protocole étant apte à être mis en oeuvre selon un mode bidirectionnel total, ledit procédé étant remarquable en ce que ledit procédé de restauration comprend :
- une phase d'initialisation comprenant les étapes consistant :
   * pour le terminal, à envoyer à destination du serveur de synchronisation un message d'initialisation comportant un indicateur de demande de restauration,
   * pour le serveur de synchronisation, à envoyer à destination du terminal un message de réponse requérant du terminal la mise en oeuvre dudit mode bidirectionnel total,
- une phase de restitution comprenant les étapes consistant :
   * pour le terminal, à envoyer au serveur de synchronisation les données présentes dans le terminal,
   * pour le serveur de synchronisation, à restituer au terminal des données à partir des données stockées sauvegardées.

Selon une première variante, lors de la phase de restitution, le serveur restitue au terminal les données conformes aux données stockées sauvegardées.

Selon une deuxième variante ladite étape de restitution consiste à modifier les données reçues du terminal selon le schéma suivant :
- suppression des données reçues absentes des données stockées sauvegardées,
- création des données stockées sauvegardées, non reçues,
- remplacement des données reçues modifiées par des données stockées sauvegardées.

Selon une troisième variante, ladite étape de restitution est effectuée selon le schéma suivant :
- suppression de toutes les données présentes dans le terminal,
- création dans le terminal de toutes les données présentes dans le serveur de synchronisation.

Cette troisième variante est intéressante en ce qu'aucun traitement particulier n'est réalisé sur le serveur.

Selon une quatrième variante, ladite étape de restitution comprend une étape de modification dans laquelle les données reçues du terminal sont modifiées selon les étapes suivantes :
- une étape apte à unir les données stockées dans le terminal avec les données stockées dans le serveur de synchronisation,
- une étape apte à remplacer des données reçues par le résultat de l'union.

Cette quatrième variante est intéressante en ce que toutes les données à la fois sauvegardées et reçues du terminal sont conservées. On, évite ainsi toute perte d'information. L'utilisateur peut visualiser le résultat de l'union et décider de ce qu'il souhaite conserver sur son terminal. L'utilisateur peut par exemple décider de supprimer un ou plusieurs doublons.

Selon une cinquième variante, une donnée comprenant au moins un attribut d'un type donné, ladite étape de restitution comprend une étape de modification dans laquelle les données reçues du terminal sont modifiées selon les étapes suivantes:
- une étape apte à unir les données stockées dans le terminal avec les données stockées dans le serveur de synchronisation,
- une étape apte à détecter si l'union a généré plusieurs données d'un même type associées à au moins un attribut respectif,
- une étape apte à identifier au moins un attribut d'un même type qui diffère entre lesdites données détectées,
- L'identification réalisée, une étape apte à remplacer l'attribut reçu identifié par l'attribut sauvegardé;
- une étape apte à modifier les données reçues à la base du résultat de l'union et du remplacement précédent.
   Cette cinquième variante est intéressante en ce que suite à l'union crée la plupart du temps des duplications de données de même type associées à au moins attribut respectif dont le contenu peut différer entre une donnée et la donnée dupliquée. Grâce à cette variante, pour une donnée d'un même type, lorsque deux attributs d'un même type diffèrent, le serveur supprime l'attribut reçu du terminal et conserve l'attribut sauvegardé.
   Cette cinquième variante peut comprendre un traitement supplémentaire consistant à ne conserver qu'une seule donnée d'un même type, et en que cette donnée d'un même type comprend au moins un attribut résultant de l'union des attributs des données détectées et de l'étape de remplacement définie dans la cinquième variante. Ce traitement supplémentaire est intéressant pour l'utilisateur qui n'a plus à manipuler son terminal pour supprimer les données dupliquées.
   De même que lors de la sauvegarde, il est prévu par l'invention que ledit indicateur de demande de restauration consiste en un renommage d'une donnée d'initialisation transmise dans ledit message d'initialisation.
   L'invention concerne également un terminal équipé d'un protocole de synchronisation entre ledit terminal et un serveur de synchronisation, ledit protocole étant apte à être mis en oeuvre selon un mode bidirectionnel total, remarquable en ce que ledit terminal comprend des moyens pour émettre à destination du serveur de synchronisation un message d'initialisation comportant un indicateur de demande de sauvegarde de données stockées dans le terminal.
   Selon l'invention, ledit terminal comprend des moyens pour émettre à destination du serveur de synchronisation un message d'initialisation comportant un indicateur de demande de restauration de données sauvegardées stockées dans le serveur de synchronisation.
   L'invention concerne également un serveur de synchronisation apte à communiquer avec un terminal équipé d'un protocole de synchronisation, ledit protocole étant apte à être mis en oeuvre selon un mode bidirectionnel total, caractérisé en ce que ledit serveur de synchronisation comprend
- des moyens de réception d'un message d'initialisation issu du terminal, ledit message comportant un indicateur de demande de sauvegarde,
- des moyens pour envoyer à destination du terminal un message de réponse requérant du terminal la mise en oeuvre dudit mode bidirectionnel total,
- des moyens de réception de la totalité des données à sauvegarder,
- des moyens de sauvegarde de données reçues du terminal.
   Selon une variante, ce serveur de synchronisation comprend
- des moyens aptes à stocker des données nouvelles reçues,
- des moyens aptes à supprimer des données préalablement stockées, non reçues,
- des moyens aptes à remplacer des données préalablement stockées par des données reçues modifiées.

En référence à la deuxième variante définie ci-dessus, ledit serveur de synchronisation comprend des moyens de restitution au terminal de données sauvegardées stockées dans ledit serveur, aptes à :
- supprimer des données reçues absentes des données stockées sauvegardées,
- créer des données stockées sauvegardées, non reçues,
- remplacer des données reçues modifiées par des données stockées sauvegardées.

En référence à la troisième variante définie ci-dessus, le serveur de synchronisation comprend des moyens de restitution au terminal de données sauvegardées stockées dans ledit serveur, aptes à :
- supprimer toutes les données présentes dans le terminal,
- créer dans le terminal de toutes les données présentes dans le serveur de synchronisation.

En référence à la quatrième variante définie ci-dessus, le serveur de synchronisation comprend des moyens de restitution aptes à
- unir les données stockées dans le terminal avec les données stockées dans le serveur de synchronisation,
- Remplacer des données reçues par le résultat de l'union

En référence à la cinquième variante définie ci-dessus, une donnée comprenant au moins un attribut d'un type donné, le serveur de synchronisation comprend des moyens de restitution aptes
- à unir les données stockées dans le terminal et les données stockées dans le serveur de synchronisation,
- à détecter si l'union a généré plusieurs données d'un même type associées à au moins un attribut respectif,
- à identifier au moins un attribut d'un même type qui diffère entre lesdites données détectées.
- à remplacer l'attribut reçu identifié par l'attribut sauvegardé;
- à modifier les données reçues à la base du résultat de l'union et du remplacement de l'attribut reçu identifié par l'attribut sauvegardé.

En référence à la cinquième variante définie ci-dessus, le serveur peut comprendre des moyens aptes à ne conserver qu'une seule donnée d'un même type, et en que cette donnée d'un même type comprend au moins un attribut résultant de l'union des attributs des données détectées et d'une étape de remplacement de l'attribut reçu identifié par l'attribut sauvegardé telle que définie dans le procédé lié à la cinquième variante définie ci-dessus.

L'invention, a également pour objet le programme d'ordinateur apte à être mis en oeuvre sur le terminal tel que défini précédemment, ledit programme comprenant des instructions de code qui, lorsque le programme est exécuté, réalise une étape d'émission apte à pour émettre à destination du serveur de synchronisation un message d'initialisation comportant un indicateur de demande de sauvegarde de données stockées dans le terminal.

L'invention a également pour objet le programme d'ordinateur apte à être mis en oeuvre sur un serveur de synchronisation tel que défini précédemment, ledit programme comprenant des instructions de code qui, lorsque le programme est exécuté, réalise les étapes suivantes:
- réception d'un message d'initialisation issu du terminal, ledit message comportant un indicateur de demande de sauvegarde,
- envoi à destination du terminal un message de réponse requérant du terminal la mise en oeuvre dudit mode bidirectionnel total,
- réception de la totalité des données à sauvegarder,
- sauvegarde de données reçues du terminal.

L'invention a également pour objet un programme d'ordinateur apte à réaliser une restauration de données selon le procédé de restauration défini ci-dessus.

En résumé, on comprend que l'avantage du procédé de sauvegarde/restauration proposé par l'invention consiste en ce qu'il s'appuie sur un protocole de synchronisation, comme le protocole SyncML, disponible de manière native sur la plupart des terminaux haut et milieu de gamme, et dans l'avenir sur les terminaux bas de gamme, ce qui signifie :
- une couverture importante du marché,
- un coût nul de développement de l'application, celle-ci étant proposée d'origine par le constructeur,
- une complexité réduite de l'intégration du service,
- une certaine autonomie vis-à-vis du fournisseur de service, puisqu'une application SyncML par exemple peut se synchroniser avec n'importe quel serveur SyncML.

Enfin, il est important de noter que le procédé de sauvegarde/restauration conforme à l'invention permet non seulement de proposer un nouveau service à de nouveaux terminaux, mais aussi de proposer ce nouveau service à tout terminal de type SyncML déjà en service, et ceci sans aucune modification du terminal.

La description qui va suivre, en regard des dessins annexés, donnés à titre d'exemples non limitatifs, fera bien comprendre en quoi consiste l'invention et comment elle peut être réalisée.
La figure 1 est un diagramme illustrant les étapes de la phase d'initialisation en sauvegarde et en restauration du procédé conforme à l'invention.
La figure 2 est un diagramme illustrant les étapes de la phase de sauvegarde du procédé conforme à l'invention.
La figure 3 est un diagramme illustrant les étapes de la phase de restauration du procédé conforme à l'invention.
La figure 4 est un schéma des échanges de données entre un terminal et un serveur de synchronisation lors de la phase d'initialisation d'une procédure de synchronisation selon le protocole SyncML.
La figure 5 est un schéma des échanges de données entre le terminal et le serveur de la figure 4 lors de la phase de synchronisation d'une procédure de synchronisation selon le protocole SyncML.

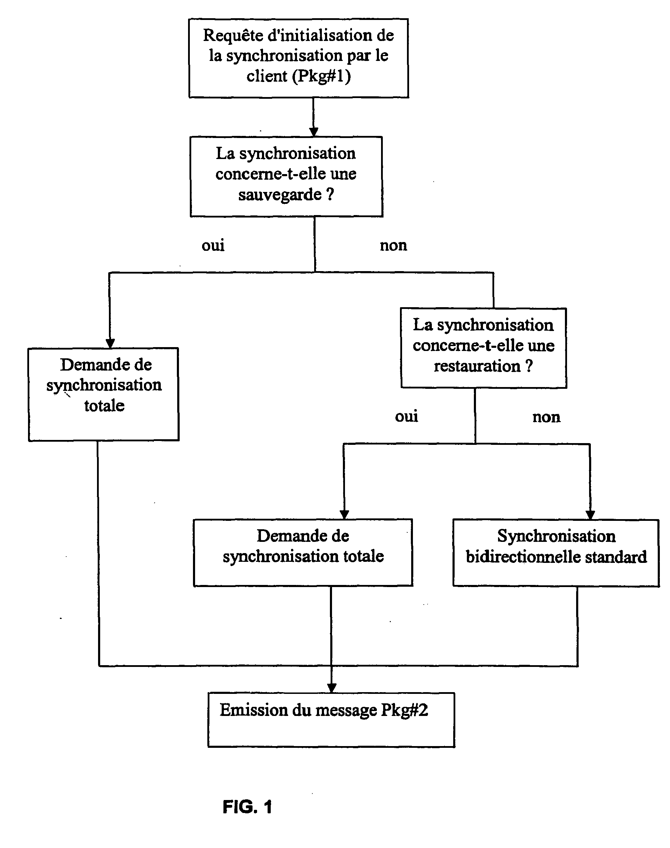

Sur les figures 1, 2 et 3 sont représentées les différentes étapes d'un procédé de sauvegarde et de restauration des données stockées dans un terminal équipé d'un protocole de synchronisation entre ledit terminal et un serveur de synchronisation.

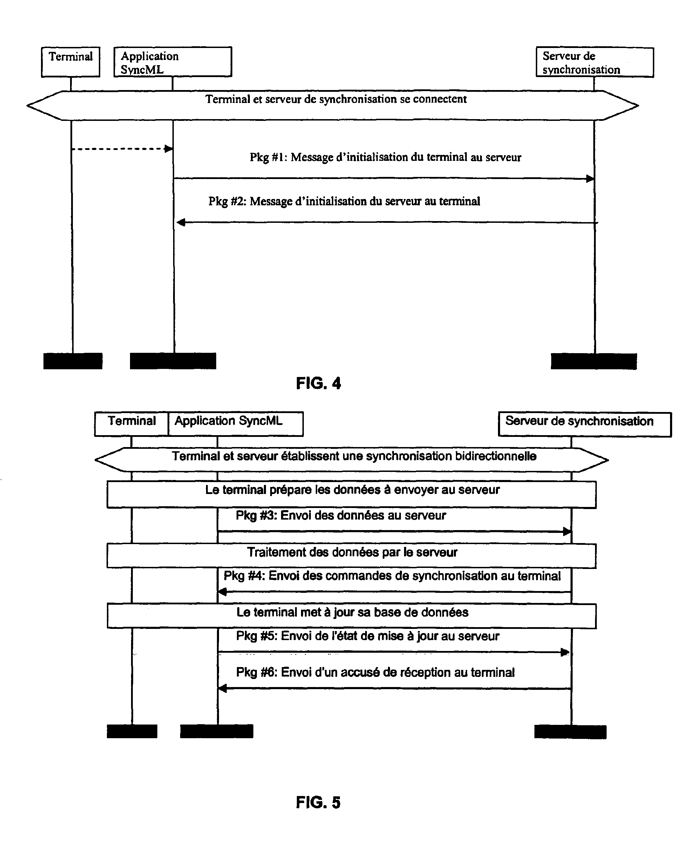

A titre d'exemple, on choisira pour protocole de synchronisation le protocole SyncML mentionné plus haut et dont le fonctionnement est rappelé sur les figures 4 et 5. Bien entendu, ce choix n'est nullement obligatoire ; il suffit seulement pour l'invention que le protocole de synchronisation mis en oeuvre soit bidirectionnel total.

En substance, ce protocole comporte une première phase, dite d'initialisation, déclenchée à la demande du terminal par l'envoi au serveur d'un message Pkg#1 contenant diverses informations comme le mode de synchronisation, ici le mode bidirectionnel, ou encore le nom de la base de données à synchroniser. Le serveur répond par l'envoi à destination du terminal d'un message Pkg#2 qui est essentiellement un message d'accusé de réception.

Durant la phase de synchronisation proprement dite, illustrée sur la figure 5, le terminal transmet au serveur, dans un message Pkg#3, les données qui doivent être synchronisées. Le serveur effectue alors les opérations de synchronisation par comparaison entre les données reçues du terminal et celles qu'il a stockées en mémoire, puis il envoie un message Pkg#4 contenant les modifications que le terminal doit apporter à ses propres données pour les rendre synchrones avec celles du serveur. Enfin, le processus de synchronisation se termine par un échange de messages Pkg#5 et Pkg#6 du type accusé de réception.

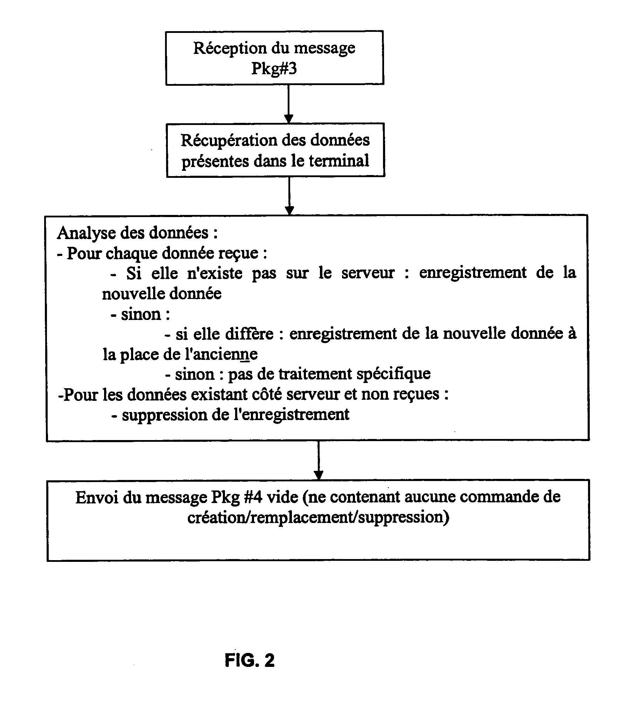

Le procédé de sauvegarde selon l'invention va maintenant être décrit en référence aux figures 1 et 2.

Conformément à la figure 1, le procédé comprend une phase d'initialisation déclenchée par le terminal, lequel émet une demande de sauvegarde à destination du serveur dans un message d'initialisation, comme le message Pkg#1 du protocole SyncML. Dans ce but, et pour indiquer au serveur de synchronisation que l'opération requise est une sauvegarde et non une simple synchronisation, le message d'initialisation comporte un indicateur de demande de sauvegarde. En pratique, cet indicateur apparaît dans les données d'initialisation fournies par le terminal dans le message Pkg#1. Ce peut être par exemple un renommage de la base de données à sauvegarder, comme SVG_CA pour indiquer une demande de sauvegarde de la base de carnet d'adresses CA.

En réponse, le serveur de synchronisation émet un message Pkg#2 requérant de la part du terminal la mise en oeuvre du mode bidirectionnel total.

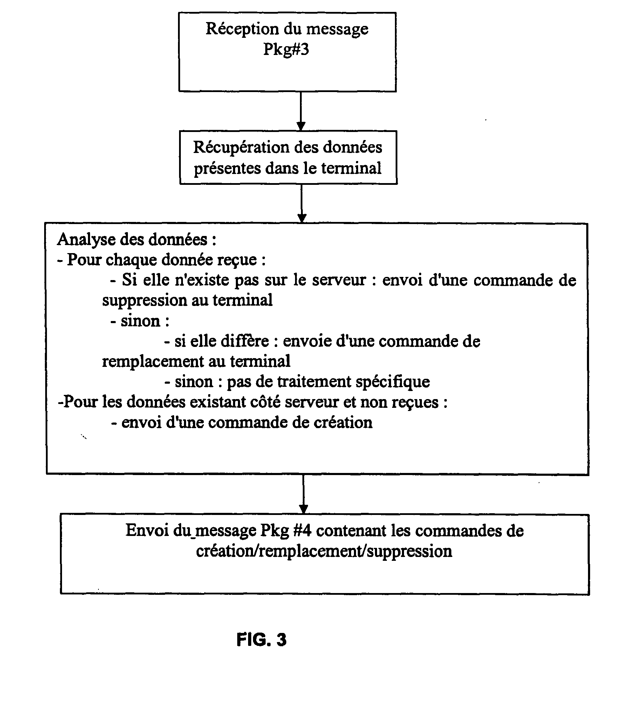

La phase de sauvegarde proprement dite qui suit la phase d'initialisation est illustrée sur la figure 2 et consiste essentiellement pour le terminal à envoyer au serveur dans un message du type Pkg#3 les données qu'il souhaite sauvegarder. Les données reçues sont alors stockées par le serveur à titre de sauvegarde. Pour cela, deux modes de stockage sont possibles pour le serveur :
- un stockage en bloc des données reçues dans un espace-mémoire, ce mode de stockage étant principalement utilisé lorsque des sauvegardes multiples sont effectuées pour des données identiques.
- un stockage par modification des données préalablement présentes dans un espace-mémoire du serveur, comme représenté sur la figure 3. Le schéma de modification appliqué par le serveur est le suivant :
   * si une donnée est nouvellement reçue et n'existe pas dans le serveur, elle est enregistrée et stockée dans l'espace-mémoire correspondant,
   * au contraire, une donnée existant au préalable dans le serveur, mais non reçue avec le message Pkg#3, est supprimée,
   * enfin, si une donnée est reçue modifiée, elle est enregistrée et stockée dans le serveur en remplacement de la donnée préexistante.

Dans le cadre du protocole SyncML, le message Pkg#4 est retourné vide au terminal et les messages Pkg#5 et Pkg#6 sont inchangés par rapport à ce qu'ils sont dans le processus de synchronisation proprement dite.

Comme pour la sauvegarde, la restauration des données du serveur au terminal débute par une phase d'initialisation, montrée sur la figure 1, analogue à la phase d'initialisation de sauvegarde : le terminal envoie un message Pkg#1 comportant un indicateur de demande de restauration par exemple par renommage des données à restaurer, comme RST_CA. De même que pour la sauvegarde, le serveur répond par un message Pkg#2 requérant du terminal la mise en oeuvre du mode bidirectionnel total.

La phase de restauration proprement dite, illustrée sur la figure 3, débute, comme pour la sauvegarde, par l'envoi au serveur, dans un message Pkg#3, des donnés présentes dans le terminal. Puis, le serveur met ces données en conformité avec les données qu'il a auparavant stockées et auvegardées. A cet effet, le serveur établit des commandes de suppression, création et remplacement de données qu'il envoie au terminal avec le message Pkg#4. L'exécution par le terminal de ces commandes réalise larestauration requise.

Lesdites commandes peuvent être établies selon les différents cas suivants :

### a) cas d'une restauration simple

- si une donnée reçue du terminal n'existe pas dans le serveur : constitution d'une commande de suppression,
- si une donnée existant dans le serveur n'est pas reçue : constitution d'une commande de création,
- enfin, si une donnée est reçue modifiée par rapport à celle stockée sauvegardée, une commande de remplacement de la donnée présente dans le terminal par celle du serveur est constituée.

Une variante à ce schéma consiste à supprimer toutes les données présentes dans le terminal et à créer dans le terminal toutes les données présentes dans le serveur.

### b) cas d'une restauration par union des données sauvegardées avec les données reçues.

- si une donnée reçue du terminal n'existe pas dans le serveur : aucune action de la part du serveur (ou constitution d'une commande de modification),
- si une donnée existant dans le serveur n'est pas reçue : constitution d'une commande de création,
- enfin, si une donnée est reçue modifiée par rapport à celle stockée sauvegardée, une commande de remplacement de la donnée reçue est constituée. Le contenu des données de remplacement est calculé à partir des données reçues du terminal et de celles stockées par le serveur

Les messages Pkg#5 et Pkg#6 sont inchangés.

### Exemple d'application

Soit un terminal qui à la suite de la dernière synchronisation avec un serveur a trois contacts dans son carnet d'adresses :
Mickael 0296053194
Fred 0296050000
Eric 0296051111

Puis, le contact Eric est supprimé côté terminal et le n° de Fred est remplacé par 0296052222. Dans le même temps, Fred est modifié côté serveur par l'ajout du n° de mobile 0622222222 et un nouveau contact Yves est ajouté.

### 1) Lors d'une synchronisation bidirectionnelle classique, les opérations suivantes sont réalisées par le serveur :

- Côté serveur, suppression du contact Eric et fusion des modifications sur Fred (modification du n° fixe).
- Envoi au terminal d'une commande de modification du contact Fred fusionné (ajout du n° mobile).
- Envoi au terminal d'une commande de création du nouveau contact Yves.
Au final, on a donc le même contenu de part et d'autre :
Mickael 0296053194
Fred 0296052222 0622222222
Fred 0296052222 0622222222

### 2) Dans le cas de la sauvegarde du carnet d'adresse initial, le comportement du serveur est modifié par rapport à une synchronisation classique pour lui conférer un comportement unidirectionnel :

- Le serveur détecte qu'il s'agit d'une demande de sauvegarde,
- Le serveur demande à recevoir la totalité des contacts présents sur le terminal,
- Le serveur reçoit les contacts, mais les traite différemment :
   * Suppression du contact Yves côté serveur.
   * Mise à jour du contact Fred en remplaçant le contact Fred côté serveur par celui transmis par le terminal.
- Aucune modification n'est renvoyée au terminal

Au final, on a donc le même contenu de part et d'autre :
Mickael 0296053194
Fred 0296050000
Eric 0296051111

### 3) Cas de la restauration simple

Elle a lieu quelque temps après la sauvegarde ci-dessus, et on suppose qu'entre temps des modifications ont été effectuées sur le terminal :
Fred 0296050000
Eric 0296051111
Bernard 0143000000

Lors de la synchronisation, le comportement du serveur est modifié par rapport à une synchronisation bidirectionnelle classique :
- Le serveur détecte qu'il s'agit d'une demande de restauration,
- Il demande à recevoir la totalité des contacts présents sur le terminal,
- Il reçoit les contacts, mais les traite différemment :
   * Aucune modification n'est effectuée côté serveur.
   * Le serveur envoie une commande de suppression du contact Bernard au terminal.
   * Le serveur envoie une commande de création du contact Mickael au terminal.

Au final, on a donc le même contenu de part et d'autre qui correspond à ce qui a été sauvegardé :
Mickael 0296053194
Fred 0296050000
Eric 0296051111

### 4) Cas de la restauration avec union,

Dans la suite de la description, une donnée désignera un ensemble comprenant un contact et au moins un attribut lié à ce contact.

La restauration peut résider en une restauration basée sur un union des données reçues avec les données sauvegardées (cf 4.1). La restauration peut également résider en une union accompagnée d'un traitement apte à automatiser la gestion des duplications générées par l'union.

### 4.1 Restauration par union

La restauration par union est une alternative à la restauration simple décrite ci-dessus permettant de limiter au maximum le risque de perte d'information. Cette restauration a lieu après la sauvegarde 2) définie ci-dessus, et on suppose que suite à la sauvegarde les modifications suivantes ont été effectuées sur le terminal et que le contenu est désormais:
Fred 0296050000
Eric 0296052222 0601020304
Bernard 014300000

Rappelons que lors la dernière synchronisation, les données sauvegardées étaient les suivantes:
Mickael 0296053194
Fred 0296050000
Eric 0296051111

Dans cet exemple, une donnée inclus un contact lié à au moins un attribut; Par exemple, le contact Eric comprend deux attributs à savoir 0296052222 et 0601020304 d'un type donné correspondant à un numéro de téléphone fixe et à un numéro de téléphone mobile, respectivement.

Dans cet exemple, lors de la synchronisation, le comportement du serveur est modifié par rapport à une synchronisation bidirectionnelle classique;

La restauration avec union comprend plusieurs étapes:
- premièrement, le serveur reçoit une demande de restauration initiée par un terminal,
- deuxièmement, le serveur demande à recevoir la totalité des contacts présents sur le terminal qui a initié la demande de restauration,
- troisièmement, le serveur reçoit les contacts, et réalise les étapes suivantes:
   - une étape d'union dans laquelle une union des contacts reçus du terminal avec les contacts sauvegardés dans le serveur est réalisée.
      Dans notre exemple de réalisation, le résultat de l'union est le suivant
      Fred 0296050000
      Eric 0296052222 0601020304
      Bernard 0143000000
      Mickael 0296053194
      Eric 0296051111
      On s'aperçoit que cette union génère l'apparition de plusieurs contacts d'un même type. Par exemple le contact Eric apparaît deux fois; un premier contact Eric est lié à deux attributs (0296052222 0601020304) et un second contact Eric lié à un attribut (0296051111). Cette duplication laisse ainsi, à l'utilisateur, le choix
      - de conserver les contacts dupliqués dans son carnet d'adresse,
      - ou de réaliser un traitement manuel pour modifier ces duplications.

### 4.2 Union accompagnée d'un traitement afin d'automatiser la gestion des duplications générées par l'union.

La restauration peut aussi être réalisée au moyen d'une restauration basée sur une union à laquelle un traitement informatique est appliqué afin d'automatiser la gestion des duplications générées par l'union. Grâce à ce traitement, l'utilisateur a la possibilité de ne conserver qu'un seul contact d'un type donné dans son terminal et supprimer tout ou partie des duplications générées par l'union.

Lors de la restauration, si le serveur détecte que l'union a généré plusieurs contacts d'un même type associés à au moins un attribut respectif, et identifie au moins un attribut d'un même type qui diffère entre au moins deux contacts d'un même type, le serveur réalise alors une étape de modification consistant à remplacer l'attribut reçu identifié par l'attribut sauvegardé; Dans notre exemple, le résultat de l'union appliquée au contact Eric est:
Eric 0296052222 0601020304
Eric 0296051111

Le contact Eric apparaît donc deux fois dans le résultat de l'union.
   On s'aperçoit, pour ce contact Eric, qu'un attribut du type correspondant à un numéro de téléphone fixe diffère entre la donnée sauvegardée et la donnée reçue.
   On considère dans notre exemple que l'attribut à retenir par défaut est l'attribut sauvegardé. En conséquence, pour un même contact, tout attribut identifié d'un type donné sera remplacé par un attribut sauvegardé d'un même type.
   De préférence, les deux contacts Eric sont transformés en un seul contact Eric dont les attributs résultent d'une union entre les attributs des contacts Eric et d'une étape de remplacement de l'attribut reçu identifié par l'attribut sauvegardé du même type. Dans notre exemple, union entre les attributs des contacts Eric correspond à Eric 0296052222 0601020304 0296051111. Dans cette union, deux attributs de même type diffèrent; la règle est donc de remplacer l'attribut reçu identifié par l'attribut sauvegardé du même type. Le résultat de l'union et du remplacement abouti donc à:
   Eric 0296051111 0601020304
   En conséquence, la restauration par union accompagnée d'un traitement admet les règles suivantes:
   * Aucune modification n'est effectuée côté serveur.
   * Aucune commande n'est transmise au terminal pour un contact reçu qui n'avait pas fait l'objet d'une synchronisation; dans notre exemple, le contact Bernard est donc inchangé.
   * Le serveur calcule le nouveau contenu d'un contact lorsque deux contacts d'un même type apparaissent au moins deux fois et qu'au moins un attribut d'un même type diffère entre ces deux contacts. Dans notre exemple, le serveur transmet une commande de modification du contact Eric avec le contenu suivant Eric 0296051111 0601020304
   * pour tout contact sauvegardé ne faisant pas partie des contacts reçus depuis le terminal, une commande de création de contact est transmise au terminal. Dans notre exemple de réalisation, le serveur transmet une commande de création du contact Mickael au terminal, à savoir Mickael 0296053194
   Dans notre exemple de réalisation, suite à la restauration par union accompagnée d'un traitement automatisé, le terminal stocke le contenu suivant:
   Mickael 0296053194
   Fred 0296050000
   Eric 0296051111 0601020304
   Bernard 0143000000

## Revendications

1. Procédé de sauvegarde de données stockées dans un terminal équipé d'un protocole de synchronisation entre ledit terminal et un serveur de synchronisation, ledit protocole étant apte à être mis en oeuvre selon un mode bidirectionnel total, **caractérisé en ce que** ledit procédé de sauvegarde comprend :
- une phase d'initialisation comprenant les étapes consistant :
* pour le terminal, à envoyer à destination du serveur de synchronisation un message d'initialisation comportant un indicateur de demande de sauvegarde,
* pour le serveur de synchronisation, à envoyer à destination du terminal un message de réponse requérant du terminal la mise en oeuvre dudit mode bidirectionnel total,
- une phase de sauvegarde comprenant les étapes consistant :
* pour le terminal, à envoyer au serveur de synchronisation la totalité des données à sauvegarder,
* pour le serveur de synchronisation, à stocker les données reçues du terminal.

2. Procédé de sauvegarde selon la revendication 1, **caractérisé en ce que** ledit indicateur de demande de sauvegarde consiste en un renommage d'une donnée d'initialisation transmise dans ledit message d'initialisation.

3. Procédé de restauration de données stockées sur un terminal, lesdites données ayant été préalablement sauvegardées sur un serveur de synchronisation selon l'une des revendications 1 ou 2, ledit terminal étant équipé d'un protocole de synchronisation apte à synchroniser les données stockées sur le terminal avec les données stockées sur le serveur de synchronisation, ledit protocole étant apte à être mis en oeuvre selon un mode bidirectionnel total, **caractérisé en ce que** ledit procédé de restauration comprend :
- une phase d'initialisation comprenant les étapes consistant :
* pour le terminal, à envoyer à destination du serveur de synchronisation un message d'initialisation comportant un indicateur de demande de restauration,
* pour le serveur de synchronisation, à envoyer à destination du terminal un message de réponse requérant du terminal la mise en oeuvre dudit mode bidirectionnel total,
- une phase de restitution comprenant les étapes consistant :
* pour le terminal, à envoyer au serveur de synchronisation les données présentes dans le terminal,
* pour le serveur de synchronisation, à restituer au terminal des données à partir des données stockées sauvegardées.

4. Procédé de restauration selon la revendication 3, **caractérisé en ce que** lors de la phase de restitution, le serveur restitue au terminal les données conformes aux données stockées sauvegardées.

5. Procédé de restauration selon la revendication 3 ou 4, **caractérisé en ce que** ladite étape de restitution consiste à modifier les données reçues du terminal selon le schéma suivant :
- suppression des données reçues absentes des données stockées sauvegardées,
- création des données stockées sauvegardées, non reçues,
- remplacement des données reçues modifiées par des données stockées sauvegardées.

6. Procédé de restauration selon l'une des revendications 3 à 5, **caractérisé en ce que** ladite étape de restitution est effectuée selon le schéma suivant :
- suppression de toutes les données présentes dans le terminal,
- création dans le terminal de toutes les données présentes dans le serveur de synchronisation.

7. Procédé de restauration selon l'une quelconque des revendications 3 à 6, **caractérisé en ce que** ledit indicateur de demande de restauration consiste en un renommage d'une donnée d'initialisation transmise dans ledit message d'initialisation.

8. Procédé de restauration selon la revendication 3, **caractérisé en ce que** ladite étape de restitution comprend une étape de modification dans laquelle les données reçues du terminal sont modifiées selon les étapes suivantes :
- une étape apte à unir les données stockées dans le terminal avec les données stockées dans le serveur de synchronisation,
- une étape apte à remplacer des données reçues par le résultat de l'union

9. Procédé de restauration selon la revendication 3, **caractérisé en ce que**, une donnée comprenant au moins un attribut d'un type donné, ladite étape de restitution comprend une étape de modification dans laquelle les données reçues du terminal sont modifiées selon les étapes suivantes:
- une étape apte à unir les données stockées dans le terminal avec les données stockées dans le serveur de synchronisation,
- une étape apte à détecter si l'union a généré plusieurs données d'un même type associées à au moins un attribut respectif,
- une étape apte à identifier au moins un attribut d'un même type qui diffère entre lesdites données détectées.
- L'identification réalisée, une étape apte à remplacer l'attribut reçu identifié par l'attribut sauvegardé;
- une étape apte à modifier les données reçues à la base du résultat de l'union et du remplacement précédent.

10. Procédé selon la revendication 3, **caractérisé en ce que** l'étape de modification consiste en outre à ne conserver qu'une seule donnée d'un même type, et en que cette donnée d'un même type comprend au moins un attribut résultant de l'union des attributs des données détectées et de l'étape de remplacement.

11. Terminal équipé d'un protocole de synchronisation apte à synchroniser des données stockées sur ledit terminal avec des données stockées sur un serveur de synchronisation, ledit protocole étant apte à être mis en oeuvre selon un mode bidirectionnel total, **caractérisé en ce que** ledit terminal comprend des moyens pour émettre à destination du serveur de synchronisation un message d'initialisation comportant un indicateur de demande de sauvegarde de données stockées dans le terminal.

12. Terminal selon la revendication 11, **caractérisé en ce que** ledit terminal comprend des moyens pour émettre à destination du serveur de synchronisation un message d'initialisation comportant un indicateur de demande de restauration de données sauvegardées stockées dans le serveur de synchronisation.

13. Serveur de synchronisation apte à communiquer avec un terminal équipé d'un protocole de synchronisation, ledit protocole étant apte à être mis en oeuvre selon un mode bidirectionnel total, **caractérisé en ce que** ledit serveur de synchronisation comprend
- des moyens de réception d'un message d'initialisation issu du terminal, ledit message comportant un indicateur de demande de sauvegarde,
- des moyens pour envoyer à destination du terminal un message de réponse requérant du terminal la mise en oeuvre dudit mode bidirectionnel total,
- des moyens de réception de la totalité des données à sauvegarder,
- des moyens de sauvegarde de données reçues du terminal.

14. Serveur de synchronisation selon la revendication 13, **caractérisé en ce qu'**il comprend
- des moyens aptes à stocker des données nouvelles reçues,
- des moyens aptes à supprimer des données préalablement stockées, non reçues,
- des moyens aptes à remplacer des données préalablement stockées par des données reçues modifiées.

15. Serveur de synchronisation selon la revendication 13, **caractérisé en ce que** ledit serveur de synchronisation comprend des moyens de restitution au terminal de données sauvegardées stockées dans ledit serveur, aptes à :
- supprimer des données reçues absentes des données stockées sauvegardées,
- créer des données stockées sauvegardées, non reçues,
- remplacer des données reçues modifiées par des données stockées sauvegardées.

16. Serveur de synchronisation selon la revendication 13, **caractérisé en ce que** ledit serveur de synchronisation comprend des moyens de restitution au terminal de données sauvegardées stockées dans ledit serveur, aptes à :
- supprimer toutes les données présentes dans le terminal,
- créer dans le terminal toutes les données présentes dans le serveur de synchronisation.

17. Serveur de synchronisation selon la revendication 13, **caractérisé en ce qu'**il comprend des moyens de restitution aptes à
- unir les données stockées dans le terminal avec les données stockées dans le serveur de synchronisation,
- Remplacer les données reçues par le résultat de l'union

18. Serveur de synchronisation selon la revendication 13, **caractérisé en ce que**, une donnée comprenant au moins un attribut d'un type donné, le serveur comprend des moyens de restitution aptes
- à unir les données stockées dans le terminal et les données stockées dans le serveur de synchronisation,
- à détecter si l'union a généré plusieurs données d'un même type associées à au moins un attribut respectif,
- à identifier au moins un attribut d'un même type qui diffère entre lesdites données détectées.
- à remplacer l'attribut reçu identifié par l'attribut sauvegardé;
- à modifier les données reçues à la base du résultat de l'union et du remplacement de l'attribut reçu identifié par l'attribut sauvegardé.

19. Serveur de synchronisation selon la revendication 18, **caractérisé en ce qu'**il comprend en outre parmi les moyens de restitution, des moyens aptes à ne conserver qu'une seule donnée d'un même type, et en que cette donnée d'un même type comprend au moins un attribut résultant de l'union des attributs des données détectées et d'une étape de remplacement de l'attribut reçu identifié par l'attribut sauvegardé.

20. Programme d'ordinateur apte à être mis en oeuvre sur un terminal tel que défini dans l'une des revendications 11 ou 12, ledit terminal étant apte à communiquer avec un serveur de synchronisation, ledit programme comprenant des instructions de code qui, lorsque le programme est exécuté, réalise une étape d'émission dans laquelle un message d'initialisation comportant un indicateur de demande de sauvegarde de données stockées dans le terminal est émis à destination du serveur de synchronisation.

21. Programme d'ordinateur apte à être mis en oeuvre sur un serveur de synchronisation tel que défini dans l'une des revendications 13 à 19, ledit programme comprenant des instructions de code qui, lorsque le programme est exécuté, réalise les étapes suivante:
- réception d'un message d'initialisation issu du terminal, ledit message comportant un indicateur de demande de sauvegarde,
- envoi à destination du terminal un message de réponse requérant du terminal la mise en oeuvre dudit mode bidirectionnel total,
- réception de la totalité des données à sauvegarder,
- sauvegarde de données reçues du terminal.

22. Programme selon la revendication 21, **caractérisé en ce qu'**il réalise en outre, lors de son exécution, une restauration des données selon l'une des revendications 3 à 10.
